# EUROPEAN PATENT SPECIFICATION

(11) **EP 3 130 625 B1**
(45) Date of publication and mention of the grant of the patent: **19.09.2018**
(21) Application number: 15777143.7
(22) Date of filing: 01.04.2015
(51) Int. Cl.: B32B 27/30, C09J 4/02, C09J 11/06, C09J 181/00, B32B 25/04, B32B 7/12, B32B 27/40, C08G 18/67, C08G 18/38, C08G 75/045, C09J 175/16, B32B 25/08, C08G 75/04, B32B 25/12, B32B 25/14, C09J 181/02, B32B 15/06, C08G 18/79, C08G 18/80, C08G 18/81

(54) **COMPOSITION, ADHESIVE, AND LAMINATE**
ZUSAMMENSETZUNG, KLEBSTOFF UND LAMINAT
COMPOSITION, ADHÉSIF ET STRATIFIÉ

(30) Priority: 07.04.2014 JP 2014078905
(43) Date of publication of application: 15.02.2017
(73) Proprietor: Bridgestone Corporation, Tokyo 104-8340 (JP)
(72) Inventor: KITANO, Hajime, Tokyo 104-8340 (JP)
(74) Representative: Oxley, Robin John George
(86) International application number: PCT/JP2015/060383
(87) International publication number: WO 2015/156194

(56) References cited:
- JP-A- H11 504 314
- JP-A- S60 108 430
- JP-A- 2003 277 505
- JP-A- 2010 254 855
- US-A1- 2005 119 366
- US-A1- 2005 245 711

## Description

### Technical Field

The present invention relates to a composition, an adhesive and a layered body, and more specifically relates to a composition and an adhesive that are suitable for adhesion to rubber, and a layered body in which a rubber layer is adhered using the composition.

### Background Art

Although materials exhibiting excellent adhesive power to vulcanized rubber have thus far been desired, there has not been a material which provides sufficient adhesion power to vulcanized rubber. Methods employed for adhering vulcanized rubber are disclosed, for example, in Japanese Patent Application Laid-open (JP-A) No. H10-139901. In the method disclosed in JP-A No. H10-139901, vulcanized rubber is surface-treated, and another member is adhered to the surface-treated face using an adhesive. Reference is also made to US 2005/119366 which discloses thiolene-curing adhesive formulations and US 2005/245711 which discloses self-photoinitiating water-dispersible acrylate ionomers.

### SUMMARY

With regard to the adhesion of vulcanized rubber, although vulcanized rubber may be adhered to another member via a polyurethane-based adhesive via the method disclosed in JP-A No. H10-139901, there is still room for improvement in the adhesive power.

In view of the above circumstances, the disclosure aims to provide a composition which can exhibit a high adhesive power to rubber, an adhesive which includes the composition, and a layered body resulted by adhering a rubber layer to the adhesion layer containing the composition.

### Solution to Problem

According to an aspect of the present invention, a composition that includes a polythiol compound, a (meth)acrylic compound having a plurality of at least one of an acryloyl group or a methacryloyl group and having a ring structure, and a radical generator, in which the ratio (Ac/SH) of the total molar number (Ac) of at least one of an acryloyl group or a methacryloyl group contained in the (meth)acrylic compound to the total molar number (SH) of thiol groups contained in the polythiol compound is 0.20 but lower than 0.70, is provided.

### Effect of Invention

According to an aspect of the present invention, a composition which can exhibit a high adhesive power to rubber, an adhesive which includes the composition, and a layered body resulted by adhering a rubber layer to the adhesion layer containing the composition can be provided.

### DETAILED DESCRIPTION

### Composition

The composition according to one embodiment of the present invention is a compound including: a polythiol compound(, which may be hereinafter referred to as a polythiol compound (A)); a (meth)acrylic compound having a plurality of at least one of an acryloyl group or a methacryloyl group and having a ring structure(, which may be hereinafter referred to as a (meth)acrylic compound (B)); and a radical generator(, which may be hereinafter referred to as a radical generator (C)), in which a ratio (Ac/SH) of a total molar number (Ac) of the at least one of an acryloyl group or a methacryloyl group contained in the (meth)acrylic compound (B) to a total molar number (SH) of thiol groups contained in the polythiol compound (A) is higher than 0.20 but lower than 0.70.

Hereinafter, "at least one of an acryloyl group or a methacryloyl group" may be sometimes referred to as a "(meth)acryloyl group".

Throughout the present specification, "SH" indicates a total molar number of thiol groups contained in the polythiol compound (A), and "Ac" indicates a total molar number of at least one of an acryloyl group or a methacryloyl group contained in the (meth)acrylic compound (B). A "ratio (Ac/SH)" indicates a ratio of the total molar number (Ac) of at least one of a (meth)acryloyl group contained in the (meth)acrylic compound (B) to the total molar number (SH) of thiol groups contained in the polythiol compound (A). Namely, the ratio (Ac/SH) is a value resulted by dividing Ac by SH.

In one embodiment, the composition is able to exhibit a high adhesive power to, particularly, rubber. Further, the composition is able to exhibit a high adhesive power to vulcanized rubber as well as to unvulcanized rubber. Although the reason therefor is not clear, it is presumed that the following may be the reason.

It is thought that a portion of the polythiol compound (A) becomes thiyl radicals due to the radical generator (C) activated by energy, such as thermal or light energy, and that these thiyl radicals react with the carbon-carbon double bonds present in rubber to cause chemical bonding. Moreover, it is thought that the thiyl radicals generated by the radical generator (C) also induce a thiol-ene reaction with the carbon-carbon double bonds in the (meth)acryloyl groups, and due to this, induce a radical polymerization reaction of the (meth)acrylic compound (B) with itself. It is thought that the composition rigidly cures to obtain a high film strength and also chemically bond to rubber to exhibit a high interfacial adhesive power to rubber due to such a thiol-ene reaction.

In addition, it is thought that in cases in which the composition further includes a Michael addition catalyst (hereinafter sometimes referred to as Michael addition catalyst (D)), in addition to the above thiol-ene reaction, a Michael addition reaction is induced between the other portion of the polythiol compound (A) and the (meth)acrylic compound (B). It is thought that the film formed by the composition thus cures even more rigidly to obtain a high film strength, and, as a result, the adhesion layer formed by using the composition exhibits even higher adhesive power.

Since the composition enables forming an adhesion layer that has a high interfacial adhesive power to rubber and film strength in the above manner, a high adhesive power to an adherend (rubber in particular) can be exhibited in cases in which, for example, the composition is employed as an adhesive. Reference below simply to "adhesive power" means an overall adhesive force arising from both the interfacial adhesive power and the film strength.

Note that although the composition preferably further includes the Michael addition catalyst (D), it is conceivable that the composition exhibits sufficient adhesive power to rubber by the thiol-ene reaction even in cases not containing the Michael addition catalyst (D) as described above.

Further, the composition exhibits high adhesive power to vulcanized rubber as well as to unvulcanized rubber, conceivably because carbon-carbon double bonds are present not only in unvulcanized rubber but also in vulcanized rubber.

Further, it is also conceivable that chemical bonding between a sulfur atom in a thiol group in the polythiol compound (A) and a carbon atom in a carbon-carbon bond occurs as a result of a hydrogen abstraction reaction from the main chain formed by carbon-carbon bonds present in the rubber. Therefore, the composition according to the present invention is able to exhibit adhesive power to rubber even when carbon-carbon double bonds are not necessarily present in the rubber.

Use of the composition enables sufficiently high adhesive power to be exhibited with respect to rubbers in general, even in the case where surface roughening treatment, such as grinding, is not carried out on the surfaces of the adhesion faces of the rubbers, conceivably because the composition and the rubber chemically bind to each other as described above. Omitting a surface roughening treatment on the adhesion face of the rubber, as described above, provides for simplification and improved efficiency of an adhesion process. Nevertheless, it is acceptable to carry out surface roughening treatment on the adhesion face of the rubber when using a composition. In particular, when using a liquid-form or paste-form adhesive that includes the composition, surface roughening treatment may be carried out on the adhesion face of the rubber, thereby improving the adhesive power via the utilization of an anchor effect.

Since the composition according to the present invention is able to exhibit high adhesive power to vulcanized rubber, adhesion can be achieved at a remarkably lower temperature and over a remarkably shorter length of time (for example, from 100 to 150°C for from 3 to 30 minutes) than when unvulcanized rubber materials are brought into contact with each other and adhesion is performed while vulcanizing them.

In the present specification, the polythiol compound (A), the (meth)acrylic compound (B), the radical generator (C), the Michael addition catalyst (D), and the after-mentioned surface adjustor (E) are also referred to as "component (A)", "component (B)", "component (C)", "component (D)", and "component (E)", respectively, in some cases.

### <Polythiol Compound (A)>

In the present invention, the term "polythiol compound" refers to a compound having two or more thiol groups in one molecule thereof. As the component (A), one polythiol compound may be used singly, or two or more polythiol compounds may be used in combination.

In the polythiol compound (A), the number of thiol groups in one molecule thereof is not particularly limited as long as the above-defined relationship with the total molar number of (meth)acryloyl groups in the component (B) is satisfied. From the viewpoint of improving the adhesive power, the polythiol compound (A) preferably has three or more thiol groups in one molecule thereof. The upper limit of the number of thiol groups in one molecule of the polythiol compound (A) is not particularly limited, and may be selected, as appropriate, as long as the effects according to the present invention are not impaired. The number of thiol groups in one molecule may usually be within the range of from 2 to 7, preferably within the range of from 3 to 6, and more preferably within the range of from 3 to 4, although the number may vary depending on whether the polythiol compound (A) is a low-molecular-weight compound or a high-molecular-weight compound. However, these ranges should not be construed as limiting the scope of the present invention.

The scope of the polythiol compound (A) encompasses primary thiols, secondary thiols, and tertiary thiols. Primary thiols are preferable from the viewpoint of improving the adhesive power.

The molecular weight of the polythiol compound (A) is preferably 3000 or less, more preferably 2000 or less, still more preferably 1000 or less, further more preferably 900 or less, and particularly preferably 800 or less, from the viewpoint of improving the adhesive power. Further, the lower limit of the molecular weight of the polythiol compound (A) is not particularly limited. The lower limit of the molecular weight of the polythiol compound (A) is preferably 200 or more, and still more preferably 300 or more. When the polythiol compound (A) is a polymer, the "molecular weight" refers to the styrene-equivalent number average molecular weight.

Examples of the polythiol compound (A) include an aliphatic polythiol that may include a heteroatom and an aromatic polythiol that may include a heteroatom. An aliphatic polythiol that may include a heteroatom is preferable from the viewpoint of improving the adhesive power.

The "aliphatic polythiol that may include a heteroatom" refers to an aliphatic compound that has two or more thiol groups in one molecule thereof and that may include a heteroatom. The "aromatic polythiol that may include a heteroatom" refers to an aromatic compound that has two or more thiol groups in one molecule thereof and that may include a heteroatom.

From the viewpoint of improving the adhesive power, the included heteroatom, or heteroatoms, is preferably at least one kind selected from the group consisting of oxygen, nitrogen, sulfur, phosphorus, halogen, and silicon; is more preferably at least one kind selected from the group consisting of oxygen, nitrogen, sulfur, phosphorus, and halogen; and is particularly preferably at least one kind selected from the group consisting of oxygen, nitrogen, and sulfur.

### (Aliphatic Polythiol That May Include Heteroatom)

Examples of the aliphatic polythiol that may include a heteroatom include: a polythiol in which the portion other than the thiol groups is an aliphatic hydrocarbon, such as an alkanedithiol having from 2 to 20 carbon atoms; a polythiol obtainable by replacing halogen atoms of a halohydrin adduct of an alcohol with thiol groups; a polythiol that is a hydrogen sulfide reaction product of a polyepoxide compound; a thioglycolic acid ester obtainable by an ester-forming reaction between a polyhydric alcohol having from 2 to 6 hydroxyl groups in a molecule thereof and thioglycolic acid; a mercapto fatty acid ester obtainable by an ester-forming reaction between a polyhydric alcohol having from 2 to 6 hydroxyl groups in a molecule thereof and a mercapto fatty acid; a thiol isocyanurate compound obtainable by a reaction between an isocyanurate compound and a thiol; a thiol that includes a polysulfide group; a silicone modified with thiol groups; and silsesquioxane modified with thiol groups.

Examples of the polyhydric alcohol having from 2 to 6 hydroxyl groups in a molecule thereof include an alkanediol having from 2 to 20 carbon atoms, a poly(oxyalkylene)glycol, glycerol, diglycerol, trimethylolpropane, ditrimethylolpropane, pentaerythritol, and dipentaerythritol.

Among the above-exemplified aliphatic polythiols that may include a heteroatom, from the viewpoint of improving the adhesive power, a polythiol in which the portion other than the thiol groups is an aliphatic hydrocarbon, a polythiol obtainable by replacing halogen atoms of a halohydrin adduct of an alcohol with thiol groups, a polythiol that is a hydrogen sulfide reaction product of a polyepoxide compound, a thioglycolic acid ester, a mercapto fatty acid ester, and a thiol isocyanurate compound are preferable; a mercapto fatty acid ester and a thiol isocyanurate compound are more preferable; and a mercapto fatty acid ester is particularly preferable. From similar viewpoints, a thiol that does not include a polysulfide group or a siloxane bond is also preferable.

### (Polythiol in which the Portion Other than Thiol Groups is Aliphatic Hydrocarbon)

The polythiol in which the portion other than thiol groups is an aliphatic hydrocarbon is, for example, an alkanedithiol having from 2 to 20 carbon atoms.

Examples of the alkanedithiol having from 2 to 20 carbon atoms include 1,2-ethanedithiol, 1,1-propanedithiol, 1,2-propanedithiol, 1,3-propanedithiol, , 2,2-propanedithiol, 1,4-butanedithiol, 2,3-butanedithiol, 1,5-pentanedithiol, 1,6-hexanedithiol, 1,8-octanedithiol, 1,10-decanedithiol, 1-1-cyclohexanedithiol, and 1,2-cyclohexanedithiol.

### (Thioglycolic Acid Ester)

Examples of the thioglycolic acid ester include 1,4-butanediol bisthioglycolate, 1,6-hexanediol bisthioglycolate, trimethylolpropane tristhioglycolate, and pentaerythritol tetrakisthioglycolate.

### (Mercapto Fatty Acid Ester)

The mercapto fatty acid ester is preferably a β-mercapto fatty acid ester having a primary thiol group, and is more preferably a β-mercaptopropionic acid ester of a polyhydric alcohol having from 2 to 6 hydroxyl groups in a molecule thereof, from the viewpoint of improving the adhesive power. Further, the mercapto fatty acid ester having a primary thiol group preferably has from 4 to 6 thiol groups in one molecule thereof, more preferably has 4 or 5 thiol groups in one molecule thereof, and further preferably has 4 thiol groups in one molecule thereof, from the viewpoint of improving the adhesive power.

Preferable examples of the β-mercaptopropionic acid ester having a primary thiol group include tetraethyleneglycol bis(3-mercaptopropionate) (EGMP-4), trimethylolpropane tris(3-mercaptopropionate) (TMMP), pentaerythritol tetrakis(3-mercaptopropionate) (PEMP), and dipentaerythritol hexakis(3-mercaptopropionate) (DPMP). Among these, PEMP and DPMP are preferable, and PEMP is more preferable.

The β-mercaptopropionic acid ester having a secondary thiol group is, for example, an ester between a polyhydric alcohol having from 2 to 6 hydroxyl groups in a molecule thereof and P-mercaptobutanoic acid, and specific examples thereof include 1,4-bis(3-mercaptobutylyloxy)butane and pentaerythritol tetrakis(3-mercaptobutyrate).

### (Thiol Isocyanurate Compound)

The thiol isocyanurate compound, which is obtainable via a reaction between an isocyanurate compound and a thiol, is preferably a thiol isocyanurate compound having a primary thiol group, from the viewpoint of improving the adhesive power. Further, the thiol isocyanurate compound having a primary thiol group preferably has 2 to 4 thiol groups in one molecule thereof, and more preferably has 3 thiol groups in one molecule thereof, from the viewpoint of improving the adhesive power.

The thiol isocynaurate compound having a primary thiol group is preferably tris-[(3-mercaptopropionyloxy)-ethyl]-isocyanurate (TEMPIC).

### (Silicone Modified with Thiol Group)

Examples of the silicone modified with thiol groups include mercapto-modified silicone oils such as KF-2001, KF-2004, and X-22-167B (tradenames, manufactured by Shin-etsu Chemical Co., Ltd.), SMS042 and SMS022 (tradenames, manufactured by Gelest Inc.), and PS849 and PS850 (tradenames, manufactured by UCT Inc.).

### (Aromatic Polythiol That May Include Heteroatom)

Examples of aromatic polythiols that may be used as the polythiol compound (A) include the aromatic polythiols listed below. As described above, the aromatic polythiol may include a heteroatom. Specifically, examples of the aromatic polythiols include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane.

### (Meth)Acrylic Compound (B)

In the invention, the (meth)acrylic compound having a plurality of at least one of an acryloyl group or a methacryloyl group and having a ring structure is a compound having two or more (meth)acryloyl groups in one molecule thereof and having a ring structure. Namely, it is sufficient as long as the total of the number of acryloyl groups and the number of methacryloyl groups contained in one molecule of the (meth)acrylic compound (B) is two or more. The (meth)acrylic compound (B) may have two or more of just one of acryloyl groups or methacryloyl groups in one molecule thereof, or may have both an acryloyl group and a methacryloyl group in one molecule thereof. One kind of (meth)acrylic compound alone or two or more kinds of (meth)acrylic compounds may be employed in combination as the component (B).

There are no particular limitation to the number of (meth)acryloyl groups in one molecule of the component (B) as long as the relationship to the total number of moles of the thiol groups in the component (A) is satisfied. From the perspective of increasing the adhesive power and the durability of adhesion, although the number is different depending on whether it is a low molecular weight compound or a high molecular weight compound (for example, oligomers and polymers), the number of (meth)acryloyl groups in one molecule of the component (B) is, for example, from 2 to 70, is preferably from 2 to 10, and is more preferably from 3 to 7 from the perspective of adhesive power. However, the scope of the invention is not limited to such a range.

Moreover, there are no particular limitations to the ring structure contained in the component (B) as long as it is formed as a ring, and examples of the ring structure include an aliphatic ring structures, aromatic ring structures, and heterocyclic structures.

Examples of the aliphatic ring structures include ring structures formed with carbons an other than aromatic ring structure, and the aliphatic ring structures may be saturated aliphatic ring structures or may be unsaturated aliphatic ring structures.

Specific examples of the aliphatic ring structures include monocyclic aliphatic ring structures, and more specific examples thereof include structures of cycloalkanes such as cyclohexane, and structures of cycloalkenes such as cyclohexene. The number of carbons forming the monocyclic aliphatic ring structure is, for example, in a range of from 3 to 20, is preferably in a range of from 4 to 12, is more preferably in a range of from 5 to 8, and is most preferably 6.

The aliphatic ring structures are preferably monocyclic as described above, but are not limited thereto, and may be polycyclic aliphatic ring structures. Examples of the polycyclic aliphatic ring structures include structures of polycyclic cycloalkanes such as decalin, and structures of polycyclic cycloalkanes such as norbornene. The number of carbons forming the respective rings in the polycyclic aliphatic ring structures is, for example, in a range of from 3 to 20, preferably in a range of from 4 to 12, and more preferably in a range of 5 to 8, and a polycyclic aliphatic ring structure formed with 6-membered rings is still more preferable.

Examples of the aromatic ring structures include unsaturated ring structures in which carbons having π electrons are arranged in a ring structure. Specific examples of the aromatic ring structures include monocyclic aromatic ring structures such as benzene, and (4n + 2) annulenes (wherein n is from 1 to 4), and also polycyclic aromatic ring structures such as naphthalene, anzulene, indene, fluorene, and anthracene. Out of the above, the aromatic ring structures are preferably a monocyclic or polycyclic aromatic ring structure having a benzene ring (an aromatic ring with six carbons), and is most preferably a monocyclic benzene ring structure.

The heterocyclic structures are heterocyclic structures containing one or more hetero atom(s), and may be monocyclic or polycyclic, and may be aliphatic or aromatic. The hetero atom is an atom which is other than a carbon and which forms the ring structure, and specific examples of hetero atoms include a nitrogen atom, an oxygen atom, and a sulfur atom.

Specific examples of heterocyclic structures include structures in which one or more (specifically, for example, from 1 to 3) carbon atoms in the aliphatic ring structures or the aromatic ring structures is/are substituted by a hetero atom(s). The number of hetero atoms forming a monocyclic heterocyclic structure is, for example, from 3 to 10, is preferably in the range of from 5 to 8, and is most preferably 6. Moreover, the number of hetero atoms forming each ring in a polycyclic heterocyclic structure is, for example, from 3 to 10, and is preferably in the range of from 5 to 8. The polycyclic heterocyclic structure is more preferably a 6-membered ring.

Note that the aliphatic ring structures, the aromatic ring structures, and the heterocyclic structures may include a substituent. Examples of the substituent include a (meth)acryloyl group, an oxygen atom (=O), a hydroxy group, an alkyl group, an alkoxy group, and an amino group.

The substituent may be directly introduced on an atom configuring a ring structure, or may be introduced via a linking group. In cases in which there are two or more ring structures in one molecule of the component (B), an atom configuring one of the ring structures and an atom configuring another of the ring structures may be directly bonded by a single bond, or may be bonded together through a linking group. Examples of the linking group include an alkylene group, a carbonyl group, an ether bond, an ester bond, a sulfide bond, an amide bond, a urethane bond, and a urea bond.

The component (B) may include one kind alone of the ring structures in one molecule thereof, or may include two or more kinds thereof. The component (B) may also include monocyclic ring structures alone in one molecule thereof, or may include polycyclic ring structures alone, or may include both a monocyclic ring structure and a polycyclic ring structure.

Although the number of rings contained in one molecule of the component (B) may be different depending on whether the component (B) is a low molecular weight compound or a high molecular weight compound, it may, for example, be from 1 to 200, and among these from 1 to 50 is preferable, from 1 to 20 is more preferable, and from 2 to 10 is still more preferable.

Note that in cases in which a polycyclic ring structure is included, the number of individual rings is counted to give the "number of rings". Specifically, in cases in which, for example, there is only a single anthracene structure as the ring structure in one molecule thereof, the "number of rings" is three.

Moreover, when the component (B) is a high molecular weight compound, the number average molecular weight of the component (B) is, for example, 50000 or less, is preferably 40000 or less, and is more preferably 35000 or less, from the perspective of improving the adhesive power. There is no particular limitation to the lower limit for the number average molecular weight of the component (B); however, the number average molecular weight of the component (B) is, for example, 2000 or greater.

Specific examples of the component (B) include di(meth)acrylates having a ring structure, and polyfunctional (meth)acrylates having a ring structure and three or more (meth)acrylate groups.

Moreover, preferable examples of a (meth)acrylic compound (B) having a ring structure include epoxy poly(meth)acrylate and polyester poly(meth)acrylate.

In the present specification, (meth)acrylate means at least one of an acrylate or a corresponding methacrylate.

From among the specific examples of the component (B), a compound having three or more (meth)acryloyl groups is preferable, and from among these, a compound having three or more acryloyl groups is preferable from the perspective of obtaining an adhesion layer having a high film strength.

From among the specific examples of the component (B), a (meth)acrylic compound (B) having a nitrogen atom is preferable, from the perspective of obtaining an adhesion layer having a high film strength.

Examples of a (meth)acrylic compound (B) having a nitrogen atom include a (meth)acrylic compound (B) having a heterocyclic structure including a nitrogen atom as a hetero atom, and a (meth)acrylic compound (B) in which a substituent or a linking group that includes a nitrogen atom is bound to an atom configuring a ring structure thereof. Note that the nitrogen atom included in the substituent or the linking group may be directly bonded to the atom configuring the ring structure.

From among the (meth)acrylic compounds (B) having a nitrogen atom, a (meth)acrylic compound (B) having at least one out of a urethane skeleton or an isocyanurate ring is preferable, and, specifically, a (meth)acrylate having at least one out of a urethane skeleton or an isocyanurate ring is preferable.

Examples of the (meth)acrylate having at least one out of a urethane skeleton or an isocyanurate ring include a (meth)acrylate having an isocyanurate ring as a heterocyclic structure, and a (meth)acrylate in which a urethane skeleton is bonded to an atom included in a ring structure thereof. Note that a nitrogen atom contained in the urethane skeleton may be bonded to an atom configuring the ring structure by direct bonding or bonding through an additional linking group.

Examples of the (meth)acrylate having a urethane skeleton include poly(meth)acrylate urethanes obtained by reacting an organic isocyanate compound having a ring structure with a hydroxy group-containing (meth)acrylate having one or more (meth)acryloyloxy group(s) and one hydroxy group in a molecule thereof. Examples of the poly(meth)acrylate urethanes include compounds obtained by reacting an organic isocyanate compound having a ring structure with a hydroxy group-containing (meth)acrylate and, if necessary, at least one diol selected from the group consisting of alkanediols, polyether diols, polybutadiene diols, polyester diols, polycarbonate diols, and amide diols.

A known method may be employed as the method to obtain a poly(meth)acrylate urethane by reacting a hydroxy group-containing (meth)acrylate with an organic isocyanate compound.

Examples of the organic isocyanate compound having a ring structure include: an aromatic diisocyanate having an aromatic ring structure such as toluene diisocyanate, diphenylmethane diisocyanate, diphenyl dimethyl methane diisocyanate, dibenzyl diisocyanate, naphthylene diisocyanate, phenylene diisocyanate, xylene diisocyanate, or tetramethylxylylene diisocyanate; and alicyclic diisocyanates having an aliphatic ring structure such as isophorone diisocyanate, cyclohexane diisocyanate, hydrogenated xylylene diisocyanate, hydrogenated diphenylmethane diisocyanate, or hydrogenated trimethylxylylene diisocyanate. Examples thereof further include modified products such as adducts, carbodiimide-modified products, allophanate-modified products, biuret-modified products, uretdione-modified products, uretonimine-modified products, and isocyanurate-modified products of the above.

Examples of the hydroxy group-containing (meth)acrylate include 2-hydroxyethyl (meth)acrylate, 2-hydroxypropyl (meth)acrylate, 4-hydroxybutyl (meth)acrylate, glycerin di(meth)acrylate, trimethylolpropane di(meth)acrylate, pentaerythritol tri(meth)acrylate, and dipentaerythritol penta(meth)acrylate.

The (meth)acrylate having a urethane skeleton may be a poly(meth)acrylate urethane obtained by reacting a (meth)acrylate having a ring structure and a hydroxy group with an organic isocyanate compound which has no ring structure.

Examples of the (meth)acrylic compound having an isocyanurate ring include products obtained from reacting a compound having an isocyanurate ring and plural hydroxy groups with acrylic acid or methacrylic acid.

Examples of the compound having an isocyanurate ring and plural hydroxy groups include tris(2-hydroxyethyl)isocyanurate and tris(hydroxymethyl)isocyanurate.

Specific examples of the (meth)acrylate having at least one out of a urethane skeleton or an isocyanurate ring include compounds expressed by Structural Formulae (1) to (5) below. In the present invention, compounds represented by Structural Formulae (1) to (4) are used as the (meth)acrylic compound (B).

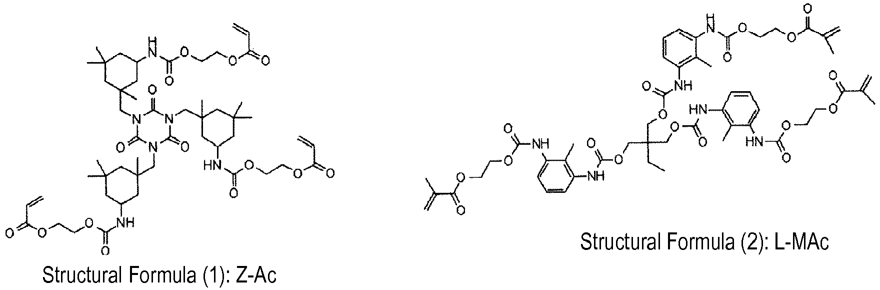

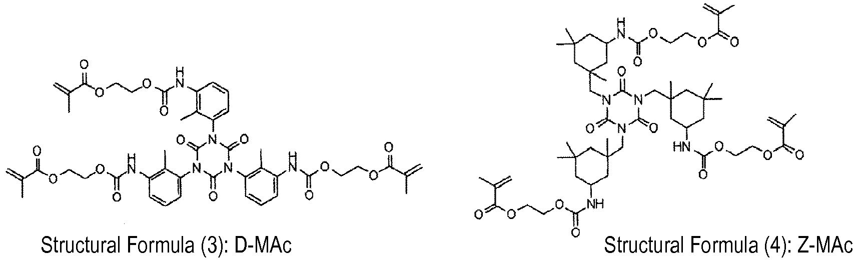

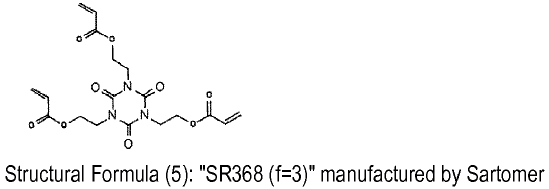

From among (meth)acrylates having at least one out of a urethane skeleton or an isocyanurate ring, a (meth)acrylate having a urethane skeleton and having a number of a ring structure of from 3 to 4 is preferable, a (meth)acrylate having a urethane skeleton and having a number of at least one out of an aliphatic ring or an aromatic ring of from 3 to 4 is more preferable, and a (meth)acrylate having an isocyanurate ring and a urethane skeleton and having a number of at least one out of an aliphatic ring or an aromatic ring of from 3 to 4 is still more preferable, from the perspective of obtaining an adhesion layer having an even higher film strength.

In addition, specific examples of di(meth)acrylates include di(meth)acrylates of cycloalkanediols such as dicyclopentanediol di(meth)acrylate. A number of carbons of the cycloalkanediol in the di(meth)acrylate of the cycloalkanediol is, for example, from 2 to 50.

Moreover, specific examples of di(meth)acrylates include cyclohexanedimethanol (meth)acrylates, tricyclodecanedimethanol (meth)acrylates, hydrogenated bisphenol-A di(meth)acrylates, bisphenol-A di(meth)acrylates, and fluorene di(meth)acrylates.

In addition, specific examples of the polyfunctional (meth)acrylates having three or more (meth)acrylate groups include (meth)acrylates obtained by reacting a polyhydric alcohol having from 6 to 100 carbons with (meth)acrylic acid.

Epoxy poly(meth)acrylate and polyester poly(meth)acrylate may be employed as the (meth)acrylic compound (B) having plural (meth)acryloyl groups as described above.

Specific examples of the epoxy poly(meth)acrylate include bisphenol di(meth)acrylate epoxies obtained by reacting a bisphenol epoxy resin, obtained by a condensation reaction of bisphenol A and epichlorohydrin, with (meth)acrylic acid.

Specific examples of the polyester poly(meth)acrylate include compounds obtained by reacting together a polyprotic acid such as phthalic acid, a polyhydric alcohol such as ethylene glycol, and methacrylic acid.

### <Radical Generator (C)>

The term "radical generator" refers to a compound that generates a radical when energy from, for example, light or heat is imparted to the compound, and specifically refers to a compound which generates a thiyl radical by reacting with the polythiol compound (A).

The radical generator(s) (C) to be used may be at least one selected from the group consisting of a thermal radical generator and a photoradical generator. Among them, thermal radical generators are preferable, and thermal radical generators including a peroxide are more preferable, from the viewpoints of improving the adhesive power and enabling the adhesion of a light-nontransmissive rubber. Examples of the thermal radical generators including a peroxide include thermal radical generators including an organic peroxide and thermal radical generators including an inorganic peroxide. Thermal radical generators including an organic peroxide are preferable.

One radical generator may be used singly as the radical generator (C), or two or more radical generators may be used in combination as the radical generator (C).

The thermal radical generator(s) including an organic peroxide to be used is, for example, at least one selected from the group consisting of t-butyl peroxy-2-ethylhexanoate, dilauroyl peroxide, 1,1,3,3-tetramethylbutyl peroxy-2-ethylhexanoate, 1,1-di(t-hexylperoxy)cyclohexanone, di-t-butyl peroxide, t-butyl cumyl peroxide, 1,1-di(t-hexylperoxy)-3,3,5-trimethylcyclohexane, t-amyl peroxy-2-ethylhexanoate, di(2-t-butylperoxyisopropyl)benzene, di(t-butyl) peroxide, peroxybenzoyl 1,1'-di(2-t-butylperoxyisopropyl)benzene, peroxybenzoyl, 1,1-di(t-butylperoxy)cyclohexane, di(3,5,5-trimethylhexanoyl)peroxide, t-butyl peroxyneodecanoate, t-hexyl peroxyneodecanoate, and dicumyl peroxide. Among these, the thermal radical generator(s) including an organic peroxide is preferably at least one selected from the group consisting of t-butyl peroxy-2-ethylhexanoate, dilauroyl peroxide, 1,1,3,3-tetramethylbutyl peroxy-2-ethylhexanoate, 1,1-di(t-hexylperoxy)cyclohexanone, di-t-butyl peroxide and t-butyl cumyl peroxide. One thermal radical generator including an organic peroxide may be used, or two or more thermal radical generators each including an organic peroxide may be used in combination.

The thermal radical generator including an inorganic peroxide is, for example, a redox radical generator composed of a combination of an oxidant and a reductant, such as a combination of a hydrogen peroxide and an iron (II) salt or a combination of a persulfuric acid salt and sodium hydrogen sulfite. One thermal radical generator including an inorganic peroxide may be used singly, or two or more thermal radical generators each including an inorganic peroxide may be used in combination.

Known photoradical generators may widely be used, without particular limitations.

The photoradical generator is, for example, an intramolecular fission-type photoradical generator, and examples thereof include: benzoin alkyl ether-based photoradical generators such as benzoin ethyl ether, benzoin isobutyl ether, and benzoin isopropyl ether; acetophenone-based photoradical generators such as 2,2-diethoxyacetophenone and 4'-phenoxy-2,2-dichloroacetophenone; propiophenone-based photoradical generators such as 2-hydroxy-2-methylpropiophenone, 4'-isopropyl-2-hydroxy-2-methylpropiophenone, and 4'-dodecyl-2-hydroxy-2-methylpropiophenone; benzil dimethyl ketal; 1-hydroxycyclohexyl phenyl ketone; anthraquinone-based photoradical generators such as 2-ethylanthraquinone and 2-chloroanthraquinone; and acylphosphine oxide-based photoradical generators.

Further examples include hydrogen abstraction-type photoradical generators such as benzophenone/amine-based photoradical generators, Michiller's ketone/benzophenone-based photoradical generators, and thioxanthone/amine-based photoradical generators. Non-extractable photoradical generators are also usable for avoiding migration of unreacted portion of photoradical generator. Examples thereof include the polymerized form of an acetophenone-based radical generator and a substance obtainable by adding a double bond of an acryl group to benzophenone.

The photoradical generator, such as those described above, may be used singly, or in combination of two or more thereof.

### <Optional Components>

The composition may further include optional components. Examples of optional components include Michael addition catalysts, solvents, binders, fillers, pigment dispersants, electric conductivity imparting agents, ultraviolet absorbers, antioxidants, anti-drying agents, penetrants, pH adjusters, metal chelating agents, mildewproof agents, antibacterial agents, surfactants, plasticizers, waxes, and leveling agents.

### Michael Addition Catalyst (D)

The composition may include a Michael addition catalyst, if necessary. The Michael addition catalyst referred to here means a compound capable of promoting a Michael addition reaction between the polythiol compound (A) and the (meth)acrylic compound (B).

An arbitrarily selected Michael addition catalyst may be employed as the Michael addition catalyst (D). Examples of such Michael addition catalysts include amine-based catalysts, base catalysts, and organometallic catalysts.

Examples of the amine-based catalysts include proline, triazabicyclodecene (TBD), diazabicycloundecene (DBU), hexahydro methyl pyrimido pyridine (MTBD), diazabicyclononane (DBN), tetramethylguanidine (TMG), and triethylenediamine (TEDA).

Examples of the base catalysts include sodium methoxide, sodium ethoxide, potassium tertiarybutoxide, potassium hydroxide, sodium hydroxide, sodium metal, lithium diisopropylamide (LDA), and butyllithium.

Examples of the organometallic catalysts include ruthenium catalysts such as (cyclooctadiene)(cyclooctatriene)ruthenium and ruthenium hydride, iron catalysts such as iron(III)chloride and iron acetylacetonate, nickel catalysts such as nickel acetylacetonate, nickel acetate, and nickel salicylaldehyde, copper catalysts, palladium catalysts, scandium catalysts, lanthanum catalysts, ytterbium catalysts, and tin catalysts.

These catalysts may be employed singly, or two or more kinds thereof may be employed in combination.

As the Michael addition catalyst (D), from among the above, an amine-based catalyst is preferable, an amine-based catalyst having two or more amino groups in one molecule thereof is more preferable, an amine-based catalyst having a ring structure is particularly preferable, and from among these a triethylene diamine is most preferable.

### (Surface Controller (E))

The composition further includes a surface controller (hereinafter also referred to as "surface controller (E)"). A silicone acrylate-based surface controller is used as the surface controller (E). Examples of other surface controllers include acrylic surface controllers, vinyl-based surface controllers, silicone-based surface controllers and fluorine-based surface controllers. Among these, silicone acrylate-based surface controllers are used from the viewpoints of compatibility and the
ability to decrease surface tension.

### (Solvent)

The composition may include a solvent, as necessary. The solvent may be any solvent that does not react with other components, without particular limitation. Examples thereof include aromatic solvents and aliphatic solvents.

Specific examples of the aromatic solvents include toluene and xylene. Examples of the aliphatic solvents include hexane, methyl ethyl ketone (MEK), and butyl acetate.

### (Other Components)

The composition may include a compound that includes a carbon-carbon double bond, as an optional component.

However, a high content of the compound that includes a carbon-carbon double bond results in a reaction between the polythiol compound (A) and the compound that includes a carbon-carbon double bond. This reaction makes it difficult for the polythiol compound (A) and a carbon-carbon double bond in the rubber to undergo a thiol-ene reaction in some cases. Or, a high content of the compound that includes a carbon-carbon double bond may make difficult the occurrence of a chemical bonding reaction between a sulfur atom of a thiol group of the polythiol compound (A) and a carbon atom in a carbon-carbon bond due to a hydrogen abstraction reaction from the main chain of the rubber formed by carbon-carbon bonds. Therefore, the ratio of the total molar number of carbon-carbon double bonds contained in the carbon-carbon double bond-containing compound contained in the composition relative to the total molar number of thiol groups contained in the polythiol compound (A) contained in the composition (carbon-carbon double bonds/thiol groups) is preferably lower than 0.4, more preferably lower than 0.1, still more preferably 0.08 or lower, further more preferably 0.05 or lower, and particularly preferably 0.01 or lower.

Here, the total molar number of carbon-carbon double bonds contained in the carbon-carbon double bond-containing compound contained in the composition can be obtained by multiplying the molar number of the compound contained in the composition by the number of carbon-carbon double bonds contained in one molecule of the compound.

The molar ratio (carbon-carbon double bonds/thiol groups) can be obtained by dividing the obtained total molar number of contained carbon-carbon double bonds by the total molar number of thiol groups contained in the polythiol compound (A) contained in the composition.

### <Contents of Individual Components>

The ratio (Ac/SH) of the total molar number (Ac) of (meth)acryloyl groups contained in the (meth)acrylic compound (B) to the total molar number (SH) of thiol groups contained in the polythiol compound (A) is higher than 0.20 but lower than 0.70. When the ratio (Ac/SH) is 0.20 or lower, the composition may not harden with sufficient tightness, and the adhesive power may decrease. When the ratio (Ac/SH) is 0.70 or higher, the amount of thiol groups in the component (A) is small relative to the amount of (meth)acryloyl groups in the component (B), as a result of which the thiol-ene reaction between thiol groups and carbon-carbon double bonds on the rubber surface may not sufficiently proceed, the composition may not tightly adhere to the rubber, and the interfacial adhesive power may decrease. Therefore, the ratio (Ac/SH) is preferably from 0.30 to 0.60. In one embodiment, the lower limit of the ratio (Ac/SH) is 0.30, 0.40, 0.50 or 0.60, and the upper limit of the ratio (Ac/SH) is a value which is larger than the lower limit and is 0.60, 0.50, 0.40 or 0.30.

The total molar number (SH) of thiol groups contained in the polythiol compound (A) can be obtained by multiplying the molar number of the polythiol compound (A) by the number of thiol groups contained in one molecule of the polythiol compound (A). In other words, the total molar number (SH) of thiol groups contained in the polythiol compound (A) refers to the total amount of thiol groups contained in the total amount of polythiol compound (A) contained in the composition according to the present invention, and does not refer to the number of thiol groups contained in one molecule of the polythiol compound.

Further, the total molar number (Ac) of (meth)acryloyl groups contained in the compound (B) can be obtained by dividing the weight content of the (meth)acrylic compound (B) by the theoretical molecular weight thereof, and multiplying the obtained value by the number of (meth)acryloyl groups contained in one molecule of the (meth)acrylic compound (B). In other words, the total molar number (Ac) of (meth)acryloyl groups contained in the (meth)acrylic compound (B) refers to the total amount of (meth)acryloyl groups contained in the total amount of the (meth)acrylic compound (B) contained in the composition, and does not refer to the number of (meth)acryloyl groups contained in one molecule of the (meth)acrylic compound.

When the total molar number (SH) of thiol groups or the total molar number (Ac) of (meth)acryloyl groups is obtained after the composition has been prepared or after the adhesion layer has been formed, the molecular structures and the contents of the component (A) and the component (B) contained in the composition (the composition before it forms an adhesion layer) may be determined using known measurement methods, such as an NMR measurement or an IR measurement, and then the values of SH and Ac may be obtained using the method described above.

The ratio of the total molar number of the radical generator (C) contained in the composition to the total molar number of thiol groups contained in the polythiol compound (A) (radical generator (C)/thiol groups) is preferably 0.025 or higher. When the ratio is 0.025 or higher, the composition is able to exhibit sufficient adhesive power. From the same viewpoint, the ratio (radical generator (C)/thiol groups) is preferably 0.03 or higher, more preferably 0.035 or higher, and particularly preferably 0.04 or higher. From the viewpoint of the improvement in adhesiveness, the ratio (radical generator (C)/thiol groups) is preferably 0.80 or lower, more preferably 0.70 or lower, and particularly preferably 0.60 or lower.

The composition may further include a Michael addition catalyst as an optional component as described above. The content of the Michael addition catalyst (D) in the composition is preferably 0.005 parts by mass to 5 parts by mass, more preferably from 0.01 parts by mass to 4 parts by mass, and particularly preferably from 0.05 parts by mass to 3.5 parts by mass, relative to 100 parts of the polythiol compound (A), from the viewpoint of increasing the film strength and the adhesive power by sufficiently promoting the Michael addition reaction between the polyol compound (A) and the (meth)acrylic compound (B).

As described above, the composition may include optional components (for example, the compound that includes a carbon-carbon double bond, or the solvent) in addition to the components (A) to (C) and (E) and the optional component (D). However, from the viewpoint of strongly adhering to rubber, particularly to vulcanized rubber, the total content of the components (A) to (D), excluding solvents, in the composition is preferably 80% by mass or higher, more preferably 90% by mass or higher, still more preferably 95% by mass or higher, and further preferably 98% by mass or higher, with respect to the total amount, excluding solvents, of the composition.

From the same viewpoint, the total content of the components (A) to (E), excluding solvents, in the composition is preferably 90% by mass or higher, more preferably 95% by mass or higher, still more preferably 99% by mass or higher, and further preferably 100% by mass, with respect to the total amount, excluding solvents, of the composition.

As described above, the composition is able to exhibit high adhesive power to rubber. Thus, the composition can suitably be used, as a composition for adhesion, in an adhesive particularly suitable for application to rubber as described below, or in a layered body that includes a rubber layer and an adhesion layer. However, the applications of the composition according to the present invention are not limited thereto; for example, colored particles or the like may be incorporated into the composition, in which case the composition may be used as a coating material for imparting decoration.

### [Adhesive]

The adhesive according to one embodiment of the present invention includes the composition. The adhesive may include components other than the composition, so long as the purpose of the present invention is not hindered. However, from the viewpoint of enabling the effect of the present invention to be favorably exerted, the content of the composition in the adhesive is preferably 90% by mass or higher, more preferably 95% by mass or higher, still more preferably 99% by mass or higher, and further preferably 100% by mass, with respect to the total amount of the adhesive.

### [Layered Body]

The layered body according to one embodiment of the present invention includes, in the recited order, a rubber layer, an adhesion layer formed using the composition, and another layer. In other words, the layered body is a layered body (laminated body) which includes plural layers adhered to one another, and in which at least one of the layers is a rubber layer, and in which the rubber layer is adhered to an adjacent layer via an adhesion layer formed using the composition or the adhesive according to the present invention. Here, the rubber layer and the another layer are not particularly limited except that they should have an adhesion face with which the adhesion layer contacts; the adhesion face is not limited to a flat plane, and may be a curved face or a face having irregularities. With respect to the rubber layer and the another layer that are adhered via the adhesion layer, the entire adhesion face of the rubber layer and/or the entire adhesion face of the another layer may be adhered via the adhesion layer, or only a part of the adhesion face of the rubber layer and/or only a part of the adhesion face of the another layer may be adhered via the adhesion layer. The layered body according to the present disclosure may have a configuration in which three or more layers, including a rubber layer, are layered with the adhesion layer(s) according to the present disclosure disposed therebetween. This configuration is not limited to a configuration in which all of the layers are adhered to one another via the adhesion layer according to the present invention.

Each of the other layers may be a rubber layer, or a layer other than a rubber layer, such as a glass layer, a metal layer or a resin layer.

The dimensions of each layer and the number of layers may be selected, as appropriate, in accordance with the purpose.

### <Rubber Layer>

The rubber layer may be formed from vulcanized rubber or unvulcanized rubber. The rubber constituting the rubber layer preferably has a carbon-carbon double bond. In this case, it is conceivable that a carbon atom of a carbon-carbon double bond contained in the rubber layer contacting the adhesion layer forms a carbon-sulfur bond with a sulfur atom of a thiol group of the polythiol compound (A) contained in the composition.

However, it is conceivable that a layered body can be obtained even when the rubber constituting the rubber layer does not have a carbon-carbon double bond. In this case, it is conceivable that a sulfur atom of a thiol group of the polythiol compound (A) and a carbon atom of a carbon-carbon bond chemically binds to each other via a hydrogen abstraction reaction in which the polythiol compound (A) pulls out hydrogen from the main chain formed by carbon-carbon bonds present in the rubber. However, from the viewpoint of improving the adhesive power, it is preferable that the rubber constituting the rubber layer has a carbon-carbon double bond.

The material of the rubber layer is not particularly limited, and examples thereof include: natural rubber (NR); conjugated diene synthetic rubber, such as polyisoprene synthetic rubber (IR), polybutadiene rubber (BR), styrene-butadiene copolymer rubber (SBR), acrylonitrile butadiene rubber (NBR), chloroprene rubber (CR), and butyl rubber (IIR); ethylene-propylene copolymer rubber (EPM); ethylene-propylene-diene copolymer rubber (EPDM); and polysiloxane rubber. Materials for the rubber layer, such as those described above, may be used singly or in combination of two or more thereof. Among those described above, natural rubber (NR), and a mixture of natural rubber and a styrene-butadiene copolymer rubber (SBR/NR), are preferable.

### <Layer other than Rubber Layer>

Examples of the other layers than the rubber layer include a metal layer, a resin layer, and a glass layer. Strong adhesion of the metal layer, the resin layer or the glass layer to the rubber layer can be achieved by using the composition.

### <Method for Manufacturing Layered Body>

Next, a method of producing a layered body using the adhesive (or the composition) is described.

First, the adhesive is applied to an adhesion face of a rubber layer. Then, the layer to which the adhesive has been applied is left for a predetermined period of time, if necessary, and an adhesion face of another layer that should face the rubber layer is brought into contact with the face to which the adhesive has been applied (the adhesion face of the rubber layer), to obtain a stacked body. In this process, the adhesive may have been applied also to the adhesion face of the another layer that should face the rubber layer. Then, curing is performed while a pressure (e.g., pressing) is applied to the obtained stacked body in the thickness direction thereof as necessary, whereby a layered body can be produced in a favorable manner.

Alternatively, the adhesive may be applied to an adhesion face of another layer(, which is a rubber layer or a layer that is not a rubber layer,) that should face a rubber layer. Then, the layer to which the adhesive has been applied is left for a predetermined period of time, if necessary, and an adhesion face of the rubber layer is brought into contact with the face to which the adhesive has been applied (the adhesion face of the another layer), to obtain a stacked body. In this process, the adhesive may have also been applied to the adhesion face of the rubber layer. Then, curing is performed while pressure (e.g., pressing) is applied to the obtained stacked body in the thickness direction thereof, whereby a layered body can be produced in a favorable manner.

When the layer to which the adhesive has been applied is left to stand for a predetermined time after the application, the period during which the layer is left to stand is preferably from 0 to 30 minutes, and more preferably from 1 to 15 minutes, from the viewpoint of maintaining the shape of the adhesive such that the adhesive would not exude from the layered body at the time of curing.

When pressure is applied to the stacked body, the pressure is preferably from 0 to 5 MPa, more preferably from 0 to 2.5MPa, and particularly preferably from 0 to 1 MPa, from the viewpoint of improving the adhesive power and preventing or suppressing exudation of the adhesive from the layered body. From the same viewpoint, the pressing time is preferably from 5 to 120 minutes, more preferably from 10 to 60 minutes, and particularly preferably from 15 to 45 minutes.

When the adhesive includes a thermal radical generator as a radical generator, the curing of the adhesive is preferably performed by heating. A temperature at which the thermal radical generator generates radicals efficiently may appropriately selected as the heating temperature, and the heating temperature is preferably a temperature that is within about ± 30°C from the temperature at which the half-life of the thermal radical generator is one minute.

When the adhesive includes a photoradical generator as a radical generator, the curing is preferably performed by photoirradiation. A ultraviolet (UV) lamp may preferably be used as the light source from the viewpoints of improving the adhesive power and reducing costs. From the same viewpoint, the photoirradiation time may be preferably from several seconds to several tens of seconds.

### EXAMPLES

The present invention is further described below in additional detail by reference to examples. However, the present invention is not limited to the following examples.

### [Raw Materials]

The following materials were used as raw materials.

### <Polythiol Compound (A) (Component (A))>

Pentaerythritol tetrakis(3-mercaptopropionate) (PEMP): a product manufactured by SC Organic Chemical Co., Ltd.

### <(meth)acrylic compound (B) (Component (B))>

Compound (Z-Ac) represented by Structural Formula (1) illustrated above
Compound (L-MAc) represented by Structural Formula (2) illustrated above
Compound (D-MAc) represented by Structural Formula (3) illustrated above
Compound (Z-MAc) represented by Structural Formula (4) illustrated above

### <Radical Generator (C) (Component (C))>

t-butyl peroxy-2-ethylhexanoate: PERBUTYL O (tradename) manufactured by NOF CORPORATION

### <Michael Addition Catalyst (D) (Component (D))>

Triethylene diamine (TEDA)

### <Surface Controller (E) (Component (E))>

Silicone acrylate-based surface controller: SIU2400 (tradename) manufactured by Toyo Chemicals Co., Ltd.

### [Measurement of Total Molar Number (SH) of Thiol Groups]

The total molar number (SH) of thiol groups contained in the polythiol compound (A) was calculated by dividing the addition amount by the theoretical molecular weight, and multiplying the obtained value by the number of thiol groups contained in one molecule of the polythiol compound (A).

### [Measurement of Total Molar Number (Ac) of (Meth)acryloyl Groups]

The total molar number (Ac) of (meth)acryloyl groups in the (meth)acrylic compound (B) was obtained by dividing the addition amount mentioned above by the theoretical molecular weight, and multiplying the obtained value by the number of (meth)acryloyl groups contained in one molecule of the (meth)acrylic compound (B).

### [Production of Rubber]

Rubber (having a length of 100 mm, a width of 25 mm, and a thickness of 3 mm) was produced from the formulation indicated in the following Table 1.

**Table 1**

| | | Type of Rubber | |
|---|---|---|---|
| | | NR/SBR | NR |
| Formulation | NR | 15 | 100 |
| | SBR | 85 | - |
| | Carbon Black | 50 | 50 |
| | Stearic Acid | 2 | 2 |
| | Anti-aging Agent | 1 | 1 |
| | Zinc Oxide | 3 | 3 |
| | Vulcanization Accelerator 1 | 0.4 | 0.4 |
| | Vulcanization Accelerator 2 | 0.2 | 0.2 |
| | Sulfur | 1.4 | 1.4 |

| | | | |
|---|---|---|---|
| *Numbers in the table indicate parts by mass | | | |

The specifics of the individual components noted in Table 1 are as follows.
Natural Rubber (NR): RSS#3
Styrene-butadiene Copolymer Rubber (SBR): JSR1500 (tradename) manufactured by JSR CORPORATION
Anti-aging Agent: N-phenyl-N'-(1,3-dimethylbutyl)-p-phenylenediamine (NOCRAC 6C (tradename) manufactured by OUCHI SHINKO CHEMICAL INDUSTRIAL CO., LTD.)
Vulcanization Accelerator 1: 1,3-diphenylguanidine (NOCCELER D (D-P) (tradename) manufactured by OUCHI SHINKO CHEMICAL INDUSTRIAL CO., LTD.)
Vulcanization Accelerator 2: di-2-benzothiazolyl disulfide (NOCCELER DM-P (DM) (tradename) manufactured by OUCHI SHINKO CHEMICAL INDUSTRIAL CO., LTD.)

### [Examples and Comparative Examples]

In Examples 1 to 9 and Comparative Examples 1 to 11, in which the NR/SBR was used as rubber, the relationship between the adhesive power and the ratio (Ac/SH) of the total molar number of (meth)acryloyl groups contained in the addition amount of the (meth)acrylic compound (B) to the total molar number of thiol groups contained in the addition amount of the polythiol compound (A) was studied by changing the ratio (Ac/SH).

The Examples and Comparative Examples are specifically described below.

### <Examples 1 to 9 and Comparative Examples 1 to 11> (in which NR/SBR was used as rubber)

Ingredients were mixed according to the formulation indicated in Tables 2 and 3 (the number for each ingredient represents the parts by mass of non-volatile portion), to obtain a composition, and the composition was employed as an adhesive. MEK or butyl acetate was used as a solvent in view of compatibility and solubility retention. The NR/SBR was used as the rubber.

The obtained adhesive was applied, in a thickness of 30 µm, to two rubber sheets, and the coated faces were adhered to each other and curing was performed, as a result of which a layered body was prepared. The curing was performed by maintaining the adhered bodies at a temperature of 150°C and a pressing them together at a pressure of 0.05 MPa for 20 minutes. Then, the adhesive power of the cured body of the adhesive (the adhesion layer) was measured as described below. The results thereof (evaluation results) are indicated in Tables 2 and 3.

### [Method Employed for Measurement of Adhesion Power of Cured Body of Adhesive (Adhesion Layer)]

The opposite ends of the adjacent rubber substrates in the layered body were pulled away from each other (in the directions normal to the principal face of the rubber sheet, the directions forming an angle of 180°) under a tension rate of 50 mm/min., and the delamination strength (N/25mm) was measured and used as an indicator of the adhesive power.

With respect to the adhesive power shown in the evaluation results, a delamination strength of 100N/25mm or greater indicates that a sufficient adhesive power at a level at which the rubber substrate breaks before delamination occurs is obtained. The delamination strength is preferably 300N/25mm or greater. In contrast, when the adhesive power (the delamination strength) is less than 100N/25mm, the reaction at the interface between the rubber substrate and the adhesive does not proceed sufficiently, and delamination occurs at the interface or the adhesive itself undergoes cohesive failure due to insufficient cohesive force of the adhesive. Occurrence of such a phenomenon indicates that the adhesive power is insufficient.

### <Examples 10 to 19 and Comparative Examples 12 to 21> (in which NR was used as rubber)

Ingredients were mixed according to the formulation indicated in the following Tables 4 and 5 (the number for each ingredient indicating the parts by mass of non-volatile portion), to obtain a composition, and the obtained composition was used as an adhesive.

The obtained adhesive was cured in the same manner as described above, and the adhesive power of the cured body of the adhesive (the adhesion layer) was measured in the same manner as described above. The NR was used as the rubber. The results thereof (the evaluation results) are indicated in Tables 4 and 5.

**Table 2**

| | Formulation | | | | | | | | Ac/SH | Component (C)/Thiol Groups | Evaluation |
|---|---|---|---|---|---|---|---|---|---|---|---|
| | Component (A) | Component (B) | | | | Component (C) | Component (D) | Component (E) | | | Adhesive Power |
| | PEMP | Z-MAc | L-MAc | D-MAc | Z-Ac | PERBUTYLO | TEDA | SIU2400 | | | |
| | (% by mass) | (% by mass) | (% by mass) | (% by mass) | (% by mass) | (% by mass) | (% by mass) | (% by mass) | (Molar Ratio) | (Molar Ratio) | (N/25mm) |
| Comparative Example 1 | 42.71 | 33.76 | - | - | - | 22.68 | - | 0.85 | 0.20 | 0.3 | 7.33 |
| Comparative Example 2 | 43.62 | - | 32.34 | - | - | 23.17 | - | 0.87 | 0.20 | 0.3 | 7.48 |
| Comparative Example 3 | 36.23 | - | - | 40.91 | - | 19.24 | - | 3.62 | 0.20 | 0.3 | 4.27 |
| Example 1 | 30.08 | - | - | 50.94 | - | 15.97 | | 3.01 | 0.30 | 0.3 | 148.20 |
| Example 2 | 31.93 | 50.48 | - | - | - | 16.95 | - | 0.64 | 0.40 | 0.3 | 452.00 |
| Example 3 | 32.40 | - | - | - | 49.74 | 17.21 | 0.01 | 0.64 | 0.40 | 0.3 | 447.52 |
| Example 4 | 28.35 | 56.03 | - | - | - | 15.06 | - | 0.57 | 0.50 | 0.3 | 396.99 |
| Example 5 | 27.89 | 55.12 | - | - | - | 14.80 | 1.63 | 0.56 | 0.50 | 0.3 | 508.80 |
| Example 6 | 29.37 | - | 54.4 | - | - | 15.60 | - | 0.59 | 0.50 | 0.3 | 247.00 |
| Example 7 | 28.88 | - | 53.52 | - | - | 15.33 | 1.69 | 0.58 | 0.50 | 0.3 | 398.53 |
| Example 8 | 28.82 | - | - | - | 55.30 | 15.30 | - | 0.58 | 0.50 | 0.3 | 404.50 |

| | | | | | | | | | | | |
|---|---|---|---|---|---|---|---|---|---|---|---|
| * In the table, "-" indicates that the component is not included. | | | | | | | | | | | |

**Table 3**

| | Formulation | | | | | | | | Ac/SH | Component (C)/Thiol Groups | Evaluation |
|---|---|---|---|---|---|---|---|---|---|---|---|
| | Component (A) | Component (B) | | | | Component (C) | Component (D) | Component (E) | | | Adhesive Power |
| | PEMP | Z-MAc | L-MAc | D-MAc | Z-Ac | PERBUTYLO | TEDA | SIU2400 | | | |
| | (% by mass) | (% by mass) | (% by mass) | (% by mass) | (% by mass) | (% by mass) | (% by mass) | (% by mass) | (Molar Ratio) | (Molar Ratio) | (N/25mm) |
| Example 10 | 26.49 | - | 58.91 | - | - | 14.07 | - | 0.53 | 0.60 | 0.3 | 197.36 |
| Comparative Example 4 | 23.60 | - | - | - | 63.40 | 12.53 | - | 0.47 | 0.70 | 0.3 | 14.30 |
| Comparative Example 5 | 21.22 | 67.09 | - | - | - | 11.27 | - | 0.42 | 0.80 | 0.3 | 12.77 |
| Comparative Example 6 | 22.14 | - | 65.66 | - | - | 11.76 | - | 0.44 | 0.80 | 0.3 | 12.25 |
| Comparative Example 7 | 16.26 | - | - | 73.47 | - | 8.64 | - | 1.63 | 0.80 | 0.3 | 10.27 |
| Comparative Example 8 | 21.64 | - | - | - | 66.44 | 11.49 | - | 0.43 | 0.80 | 0.3 | 14.93 |
| Comparative Example 9 | 18.17 | 71.82 | - | - | - | 9.65 | - | 0.36 | 1.00 | 0.3 | 14.98 |
| Comparative Example 10 | 19.02 | - | 70.50 | - | - | 10.10 | - | 0.38 | 1.00 | 0.3 | 8.16 |
| Comparative Example 11 | 13.74 | - | - | 77.59 | - | 7.30 | - | 1.37 | 1.00 | 0.3 | 8.02 |

| | | | | | | | | | | | |
|---|---|---|---|---|---|---|---|---|---|---|---|
| * In the table, "-" indicates that the component is not included. | | | | | | | | | | | |

**Table 4**

| | Formulation | | | | | | | | Ac/SH | Component (C)/Thiol Groups | Evaluation |
|---|---|---|---|---|---|---|---|---|---|---|---|
| | Component (A) | Component (B) | | | | Component (C) | Component (D) | Component (E) | | | Adhesive Power |
| | PEMP | Z-MAc | L-MAc | D-MAc | Z-Ac | PERBUTYLO | TEDA | SIU2400 | | | |
| | (% by mass) | (% by mass) | (% by mass) | (% by mass) | (% by mass) | (% by mass) | (% by mass) | (% by mass) | (Molar Ratio) | (Molar Ratio) | (N/25mm |
| Comparative Example 12 | 42.71 | 33.76 | - | - | - | 22.68 | - | 0.85 | 0.20 | 0.3 | 1.69 |
| Comparative Example 13 | 43.62 | - | 32.34 | - | - | 23.17 | - | 0.87 | 0.20 | 0.3 | 1.69 |
| Example 10 | 29.55 | - | - | 50.07 | - | 15.70 | 1.73 | 2.95 | 0.30 | 0.3 | 196.66 |
| Example 11 | 30.07 | - | - | 50.95 | - | 15.97 | - | 3.01 | 0.30 | 0.3 | 158.70 |
| Example 12 | 31.93 | 50.48 | - | - | - | 16.95 | - | 0.64 | 0.40 | 0.3 | 255.64 |
| Example 13 | 32.96 | - | 48.88 | - | - | 17.50 | - | 0.66 | 0.40 | 0.3 | 213.22 |
| Example 14 | 32.40 | - | - | - | 49.74 | 17.21 | 0.01 | 0.64 | 0.40 | 0.3 | 233.51 |
| Example 15 | 27.89 | 55.11 | - | - | - | 14.81 | 1.63 | 0.56 | 0.50 | 0.3 | 261.77 |
| Example 16 | 28.35 | 56.02 | - | - | - | 15.06 | - | 0.57 | 0.50 | 0.3 | 163.84 |
| Example 17 | 28.88 | - | 53.52 | - | - | 15.33 | 1.69 | 0.58 | 0.50 | 0.3 | 276.30 |
| Example 18 | 29.37 | - | 54.44 | - | - | 15.60 | - | 0.59 | 0.50 | 0.3 | 163.84 |
| Example 19 | 28.82 | - | - | - | 55.30 | 15.30 | - | 0.58 | 0.50 | 0.3 | 304.64 |

| | | | | | | | | | | | |
|---|---|---|---|---|---|---|---|---|---|---|---|
| * In the table, "-" indicates that the component is not included. | | | | | | | | | | | |

**Table 5**

| | Formulation | | | | | | | | Ac/SH | Component (C)/Thiol Groups | Evaluation |
|---|---|---|---|---|---|---|---|---|---|---|---|
| | Component (A) | Component (B) | | | | Component (C) | Component (D) | Component (E) | | | Adhesive Power |
| | PEMP | Z-MAc | L-MAc | D-MAc | Z-Ac | PERBUTYLO | TEDA | SIU2400 | | | |
| | (% by mass) | (% by mass) | (% by mass) | (% by mass) | (% by mass) | (% by mass) | (% by mass) | (% by mass) | (Molar Ratio) | (Molar Ratio) | (N/25mm) |
| Comparative Example 14 | 23.60 | - | - | - | 63.40 | 12.53 | - | 0.47 | 0.70 | 0.3 | 1.78 |
| Comparative Example 15 | 21.22 | 67.09 | - | - | - | 11.27 | - | 0.42 | 0.80 | 0.3 | 1.41 |
| Comparative Example 16 | 22.14 | - | 65.66 | - | - | 11.76 | - | 0.44 | 0.80 | 0.3 | 1.41 |
| Comparative Example 17 | 16.26 | - | - | 73.47 | - | 8.64 | - | 1.63 | 0.80 | 0.3 | 0.57 |
| Comparative Example 18 | 21.64 | - | - | - | 66.44 | 11.49 | - | 0.43 | 0.80 | 0.3 | 1.41 |
| Comparative Example 19 | 18.17 | 71.82 | - | - | - | 9.65 | - | 0.36 | 1.00 | 0.3 | 1.73 |
| Comparative Example 20 | 19.02 | - | 70.50 | - | - | 10.10 | - | 0.38 | 1.00 | 0.3 | 1.73 |
| Comparative Example 21 | 13.74 | - | - | 77.59 | - | 7.30 | - | 1.37 | 1.00 | 0.3 | 0.45 |

| | | | | | | | | | | | |
|---|---|---|---|---|---|---|---|---|---|---|---|
| * In the table, "-" indicates that the component is not included. | | | | | | | | | | | |

### [Evaluation]

As indicated in the tables above, the adhesive power in Examples was high due to the inclusion of the components (A) to (C), and the ratio (Ac/SH) of the total molar number of (meth)acryloyl groups contained in the component (B) to the total molar number of thiol groups contained in the component (A) being from 0.20 to less than 0.70. In particlular, since Examples 5, 7, 10, 15 and 17 further include the component (D), the adhesive power in these Examples was higher than that in Examples 4, 6, 11, 16 and 18, which were free of the component (D).

In contrast, the adhesive power in Comparative Examples was low as a result of the ratio (Ac/SH) being outside the range defined in the present invention.

The disclosure of Japanese Patent Application No. 2014-078905 is incorporated herein by reference.

All publications, patent applications, and technical criteria mentioned in this specification are herein incorporated by reference to the same extent as if each individual publication, patent application, or technical standard was specifically and individually indicated to be incorporated by reference.

### INDUSTRIAL APPLICABILITY

The composition according to the present invention can suitably be used in an adhesive suitable for, particularly, application to adhesion to rubber, and in a layered body including a rubber layer and an adhesion layer. However, the applications of the composition according to the present invention are not limited thereto, and the composition can also be used as a coating material to which colored particles or the like are incorporated, and which is used for imparting decoration or the like.

## Claims

1. A composition comprising:
a polythiol compound;
a (meth)acrylic compound having a plurality of at least one of an acryloyl group or a methacryloyl group and having a ring structure;
a radical generator; and
a surface controller which is a silicone acrylate-based surface controller,
a ratio (Ac/SH) of a total molar number (Ac) of the at least one of an acryloyl group or a methacryloyl group contained in the (meth)acrylic compound to a total molar number (SH) of thiol groups contained in the polythiol compound being higher than 0.20 but lower than 0.70, and
wherein the (meth)acrylic compound is selected from the group consisting of Structural Formulae (1) to (4):

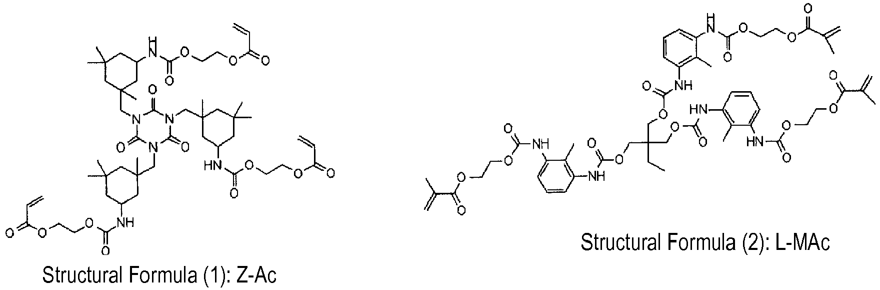

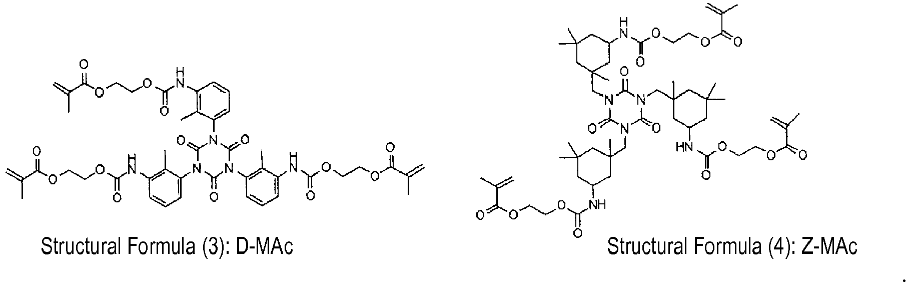

2. The composition according to claim 1, wherein the radical generator is a thermal radical generator consisting of a peroxide.

3. The composition according to claim 1 or claim 2, wherein the polythiol compound is a primary thiol.

4. The composition according to any one of claims 1 to 3, further comprising a Michael addition catalyst.

5. The composition according to claim 4, wherein the Michael addition catalyst is an amine-based catalyst.

6. The composition according to any one of claims 1 to 5, wherein the polythiol compound has three or more thiol groups in one molecule thereof.

7. The composition according to any one of claims 1 to 6, wherein the polythiol compound has a molecular weight of from 200 to 3000.

8. The composition according to any one of claims 1 to 7, wherein the polythiol compound is selected from the group consisting of: a polythiol in which the portion other than the thiol groups is an aliphatic hydrocarbon; a polythiol obtainable by replacing halogen atoms of a halohydrin adduct of an alcohol with thiol groups; a polythiol that is a hydrogen sulfide reaction product of a polyepoxide compound; a thioglycolic acid ester obtainable by an ester-forming reaction between a polyhydric alcohol having from 2 to 6 hydroxyl groups in a molecule thereof and thioglycolic acid; a mercapto fatty acid ester obtainable by an ester-forming reaction between a polyhydric alcohol having from 2 to 6 hydroxyl groups in a molecule thereof and a mercapto fatty acid; a thiol isocyanurate compound obtainable by a reaction between an isocyanurate compound and a thiol; a thiol that includes a polysulfide group; a silicone modified with thiol groups; and silsesquioxane modified with thiol groups.

9. The composition according to any one of claims 1 to 8, wherein the ratio (Ac/SH) of the total molar number (Ac) of the at least one of an acryloyl group or a methacryloyl group contained in the (meth)acrylic compound to the total molar number (SH) of thiol groups contained in the polythiol compound is from 0.30 to 0.60.

10. An adhesive comprising the composition according to any one of claims 1 to 9.

11. A layered body comprising, in this order, a rubber layer, an adhesion layer comprising the composition according to any one of claims 1 to 9, and another layer.

## Patentansprüche

1. Zusammensetzung umfassend:
eine Polythiolverbindung;
eine (Meth)acrylverbindung, die eine Mehrzahl von mindestens einer von einer Acryloylgruppe oder einer Methacryloylgruppe aufweist und eine Ringstruktur aufweist;
einen Radikalerzeuger; und
einen Oberflächenregler, der ein Oberflächenregler auf der Basis von Siliconacrylat ist,
wobei ein Verhältnis (Ac/SH) einer gesamten Molzahl (Ac) des mindestens einen von einer Acryloylgruppe oder einer Methacryloylgruppe, die in der (Meth)acrylverbindung enthalten ist, zu einer gesamten Molzahl (SH) von Thiolgruppen, die in der Polythiolverbindung enthalten sind, höher als 0,20 jedoch niedriger als 0,70 ist und
wobei die (Meth)acrylverbindung aus der Gruppe ausgewählt ist bestehend aus den strukturellen Formeln (1) bis (4):

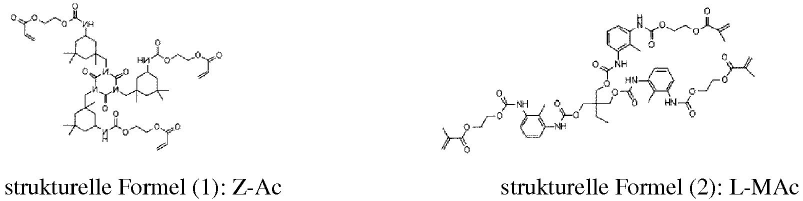

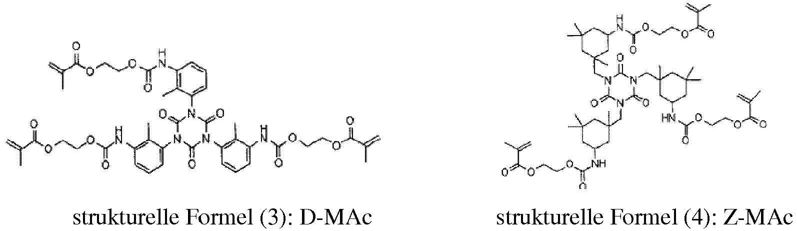

2. Zusammensetzung nach Anspruch 1, wobei der Radikalerzeuger in thermischer Radikalerzeuger ist, der aus einem Peroxid besteht.

3. Zusammensetzung nach Anspruch 1 oder Anspruch 2, wobei die Polythiolverbindung ein primäres Thiol ist.

4. Zusammenfassung nach irgendeinem der Ansprüche 1 bis 3, ferner einen Michael-Additionskatalysator umfassend.

5. Zusammensetzung nach Anspruch 4, wobei der Michael-Additionskatalysator ein Katalysator auf der Basis von Amin ist.

6. Zusammensetzung nach irgendeinem der Ansprüche 1 bis 5, wobei die Polythiolverbindung drei oder mehr Thiolgruppen in einem Molekül davon aufweist.

7. Zusammensetzung nach irgendeinem der Ansprüche 1 bis 6, wobei die Polythiolverbindung ein Molekulargewicht von 200 bis 3000 aufweist.

8. Zusammensetzung nach irgendeinem der Ansprüche 1 bis 7, wobei die Polythiolverbindung aus der Gruppe ausgewählt ist bestehend aus: einem Polythiol, in dem der Teil, bei dem es sich nicht um die Thiolgruppen handelt, ein aliphatischer Kohlenwasserstoff ist; einem Polythiol, das durch Ersetzen von Halogenatomen eines Halohydrinaddukts eines Alkohols mit Thiolgruppen erhältlich ist; einem Polythiol, das ein Wasserstoffsulfidreaktionsprodukt einer Polyepoxidverbindung ist; einem Thioglycolsäureester, der durch eine Esterbildungsreaktion zwischen einem mehrwertigen Alkohol, der 2 bis 6 Hydroxylgruppen in einem Molekül davon aufweist, und Thioglycolsäure erhältlich ist; einem Mercaptofettsäureester, der durch eine Esterbildungsreaktion zwischen einem mehrwertigen Alkohol, der 2 bis 6 Hydroxylgruppen in einem Molekül davon aufweist, und einer Mercaptofettsäure erhältlich ist; einer Thiolisocyanuratverbindung, die durch eine Reaktion zwischen einer Isocyanuratverbindung und einem Thiol erhältlich ist; einem Thiol, das eine Polysulfidgruppe enthält; einem mit Thiolgruppen modifizierten Silicon; und Silsequioxan, das mit Thiolgruppen modifiziert ist.

9. Zusammensetzung nach irgendeinem der Ansprüche 1 bis 8, wobei das Verhältnis (Ac/SH) der gesamten Molzahl (Ac) des mindestens einen von einer Acryloylgruppe oder einer Methacryloylgruppe, die in der (Meth)acrylverbindung enthalten ist, zu der gesamten Molzahl (SH) von Thiolgruppen, die in der Polythiolverbindung enthalten sind, 0,30 bis 0,60 beträgt.

10. Klebstoff umfassend die Zusammensetzung nach irgendeinem der Ansprüche 1 bis 9.

11. Schichtförmiger Körper umfassend, in dieser Reihenfolge, eine Kautschukschicht, eine Haftschicht, die die Zusammensetzung nach irgendeinem der Ansprüche 1 bis 9 umfasst, und eine andere Schicht.

## Revendications

1. Composition comprenant:
un composé polythiol;
un composé (méth)acrylique ayant une pluralité d'au moins l'un d'un groupe acryloyle ou d'un groupe méthacryloyle et ayant une structure cyclique;
un générateur de radicaux; et
un agent de régulation de surface qui est un agent de régulation de surface à base de silicone acrylate,
un rapport (Ac/SH) d'un nombre molaire total (Ac) dudit au moins un d'un groupe acryloyle ou d'un groupe méthacryloyle contenu dans le composé (méth)acrylique à un nombre molaire total (SH) des groupes thiol contenus dans le composé polythiol étant supérieur à 0,20 mais inférieur à 0,70, et
le composé (méth)acrylique étant sélectionné dans le groupe constitué des Formules structurelles (1) à (4):

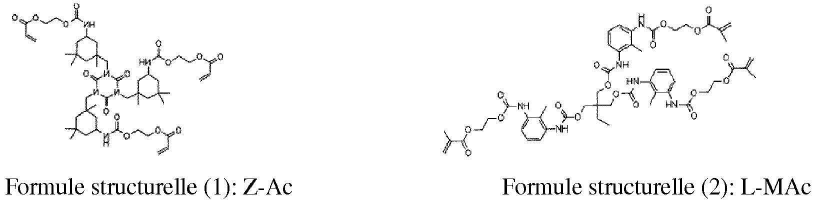

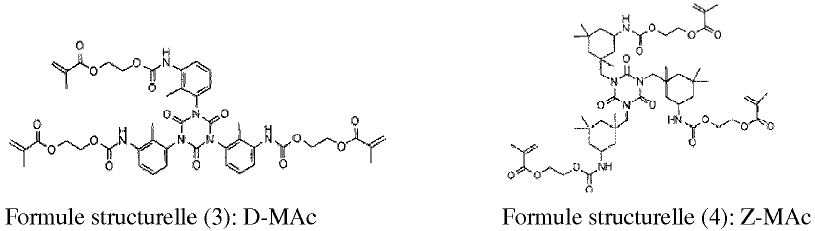

2. Composition selon la revendication 1, le générateur de radicaux étant un générateur de radicaux thermiques constitués d'un peroxyde.

3. Composition selon la revendication 1 ou la revendication 2, le composé polythiol étant un thiol primaire.

4. Composition selon l'une quelconque des revendications 1 à 3, comprenant en outre un catalyseur d'addition de Michael.

5. Composition selon la revendication 4, le catalyseur d'addition de Michael étant un catalyseur à base d'amine.

6. Composition selon l'une quelconque des revendications 1 à 5, le composé polythiol ayant trois groupes thiol ou plus dans sa molécule.

7. Composition selon l'une quelconque des revendications 1 à 6, le composé polythiol ayant un poids moléculaire de 200 à 3 000.

8. Composition selon l'une quelconque des revendications 1 à 7, le composé polythiol étant sélectionné dans le groupe constitué: d'un polythiol dans lequel la partie autre que les groupes thiol est un hydrocarbure aliphatique; un polythiol pouvant être obtenu par remplacement des atomes d'halogène d'un produit d'addition halohydrine d'un alcool avec des groupes thiol; un polythiol qui est un produit de réaction sulfure d'hydrogène d'un composé polyépoxyde; un ester d'acide thioglycolique pouvant être obtenu par une réaction de formation d'ester entre un alcool polyhydrique ayant de 2 à 6 groupes hydroxyle dans sa molécule et un acide thioglycolique; un ester d'acide mercapto gras pouvant être obtenu par une réaction de formation d'ester entre un alcool polyhydrique ayant de 2 à 6 groupes hydroxyle dans sa molécule et un acide mercapto gras; un composé thiol isocyanurate pouvant être obtenu par une réaction entre un composé isocyanurate et un thiol; un thiol qui comprend un groupe polysulfure; une silicone modifiée avec des groupes thiol; et du silsesquioxane modifié avec des groupes thiol.

9. Composition selon l'une quelconque des revendications 1 à 8, dans laquelle le rapport (Ac/SH) du nombre molaire total (Ac) dudit au moins un d'un groupe acryloyle ou d'un groupe méthacryloyle contenu dans le composé (méth)acrylique au nombre molaire total (SH) des groupes thiol contenus dans le composé polythiol est de 0,30 à 0,60.

10. Adhésif comprenant la composition selon l'une quelconque des revendications 1 à 9.

11. Corps stratifié comprenant, dans cet ordre, une couche de caoutchouc, une couche d'adhésion comprenant la composition selon l'une quelconque des revendications 1 à 9, et une autre couche.
